# NEW EUROPEAN PATENT SPECIFICATION

(11) **EP 1 860 147 B2**
(45) Date of publication and mention of the opposition decision: **19.02.2014**
(45) Mention of the grant of the patent: 27.01.2010
(21) Application number: 06010821.4
(22) Date of filing: 26.05.2006
(51) Int. Cl.: C08L 23/00

(54) **A polyolefin composition with improved stress whitening resistance**
Eine Polyolefinzusammensetzung mit verbessertem Weissbruchwiderstand
Une composition polyoléfinique avec une résistance à rupture blanche améliorée

(43) Date of publication of application: 28.11.2007
(73) Proprietor: Borealis Technology Oy, 06101 Porvoo (FI)
(72) Inventor: Pham, Tung, 4040 Linz (AT); Bernreitner, Klaus, 4010 Linz (AT)
(74) Representative: Kador & Partner

(56) References cited:
- EP-A- 1 211 289
- EP-A- 1 477 525
- EP-A- 1 510 547
- EP-A1- 0 863 183
- EP-A1- 1 344 793
- EP-A1- 1 607 440
- EP-A1- 1 860 147
- EP-A1- 2 014 716
- EP-A1- 2 055 739
- EP-A2- 0 457 455
- EP-A2- 0 588 581
- EP-A2- 0 826 728
- WO-A-02/102880
- WO-A1-01//36502
- DE-A1- 10 152 099
- US-A- 4 087 485
- US-A- 5 459 201
- US-A- 5 587 434
- F. BALDWIN ET AL.: 'Rubber Chemistry and Technology', vol. 45, 1972, ENJAY POLYMER LABORATORIES, NEW JERSEY pages 750 - 755
- ISO 1628-1:1998 (E)
- E. P. MOORE, JR.: 'Polypropylene Handbook', 1996, HANSER, MUNICH, VIENNA, NEW YORK pages 217 - 218
- P. EDWARD ET AL.: 'Propylene Handbook', 1996, HANSER, MUNICH pages 158 - 162, 218 TO 222 AND 245 TO 249
- M. CARLBERG ET AL.: 'Ethylene-Propylene-Rubber (EPR)/Polydimethylsiloxane (PDMS) Binary Polymer Blends: Morphology and Viscoelastic Properties', vol. 94, 2004, WILEY PERIODICALS pages 2240 - 2249
- EN ISO 1628-3: 2003
- M. CALBERG ET AL.: 'Ethylene-Propylene-Rubber (EPR)/Polydimethylsiloxane (PDMS) Binary Polymer Blends: Morphology and Viscoelastic Properties' JOURNAL OF APPLIED POLYMER SCIENCE vol. 94, 2004, pages 2240 - 2249
- E., P. MOORE, JR.: 'The rebirth of Polypropylene: Supported Catalysts', 1998, HANSER, MUNICH pages 95 - 96

## Description

The present invention relates to a process for the production of a polyolefin composition having an improved stress whitening resistance without loss of a good balance of impact strength and stiffness. More particularly, the present invention refers to a polypropylene composition comprising a heterophasic propylene copolymer which is modified by a coupling reaction.

Various polymer products exhibit the property known as stress whitening (SW). Hence, when such polymers are bent or impacted, the bending or impact zone turns an opaque milky colour even if the polymer is coloured. This is an undesirable property where the appearance of the polymer product is important, for example where the polymer is used in a retail product or as an external surface of a domestic or office item. Moreover, since stress whitening leads to surface roughening it is undesirable where it is important to obtain or maintain surface hygiene, e.g. in products which are used for food or medical packaging or which are used for medical or sterile manufacturing purposes.

Several methods are known in the art to decrease stress whitening. All these methods have draw-backs regarding the properties of the resulting material, i.e. mechanical and/or optical properties.

EP 0 826 728 A2 describes a modified polypropylene with reduced stress whitening, where a combination of 5 to 50 wt% of an ethylene copolymer together with a nucleating agent have the effect of improving the stress whitening resistance, stiffness modulus and simultaneously reducing the impact strength. However, the method disclosed in EP 0 826 728 A2 is only applicable to propylene homopolymers, and it is known that propylene homopolymers usually have acceptable stress whitening resistance, but they are limited in impact resistance. In contrast, heterophasic propylene copolymers provide high levels of impact strength, but are vulnerable to stress whitening.

EP 1 510 547 A1 discloses a polypropylene composition comprising a heterophasic propylene copolymer containing a propylene homopolymer matrix phase, a disperse phase of a propylene copolymer, and additionally an ethylene polymer used as modifier. The polypropylene composition of EP 1 510 547 A1 has an acceptable balance between stress whitening and impact strength. However, there is still the need to improve the stress whitening behaviour of polypropylene compositions and, simultaneously, maintain a good balance between impact strength and stiffness.

Therefore, the object of the present invention is a process for the production of a polypropylene composition having an improved stress whitening resistance, in particular a reduced stress whitening under impact, and a good balance of impact strength and stiffness.

The present invention is based on the finding that the above object can be achieved if the polypropylene composition comprising a modified heterophasic propylene copolymer, which contains an ethylene-propylene rubber comprising a propylene-rich ethylene-propylene rubber fraction, is modified in a chemical coupling reaction.

Therefore, the present invention provides a process for the production of a modified polypropylene composition wherein a polypropylene composition comprising
a heterophasic polypropylene copolymer consisting of
(a) a propylene homopolymer or a propylene random copolymer with a comonomer content of not more than 5 wt% based on the total propylene copolymer as matrix phase and
(b) 10-20 wt%, based on the total weight of the heterophasic propylene copolymer, of an ethylene-propylene rubber comprising an ethylene propylene rubber fraction (1) having an intrinsic viscosity of 1.1 to 2.3 dl/g and a propylene content of 55 to 90 wt% based on the total ethylene propylene rubber fraction;
is modified by reacting the composition with a coupling agent and 2 to 30 wt% of an ethylene homo- or copolymer, based on the total polypropylene composition, is added to the composition.

The coupling reaction is preferably carried out by reacting a coupling agent with the polypropylene composition. Free radical initiators are preferably used as coupling agent, especially preferred are organic peroxides as free radical initiators.

Peroxides which are thermally decomposable upon the conditions of heating and melting the polypropylene composition and which meet the requirement of having a half life time t(1/2) at 110 °C of > 6 min and a half life time t(1/2) at 150°C of < 6 min are suitable. The following organic peroxides are suitable for the above process:

Dibenzoyl peroxide, tert-Butyl peroxy-2-ethylhexanoate, tert-Amyl peroxy-2-ethylhexanoate, tert-Butyl peroxydiethylacetate, 1,4-Di(tert-butylperoxycarbo)cyclohexane, tert-Butyl peroxyisobutyrate, 1,1-Di(tert-butylperoxy)-3,3,5-trimethyl-cyclohexane, Methyl isobutyl ketone peroxide, 2,2-Di(4,4-di(tert-butylperoxy)cyclohexyl)propane, 1,1-Di(tert-butylperoxy)cyclohexane, tert-Butyl peroxy-3,5,5-trimethylhexanoate, tert-Amylperoxy 2-ethylhexyl carbonate, 2,2-Di(tert-butylperoxy)butane, tert-butylperoxy isopropyl carbonate, tert-Butylperoxy 2-ethylhexyl carbonate, tert-Butyl peroxyacetate, tert-butyl peroxybenzoate, Di-tert-amyl peroxide and mixtures of these organic peroxides.

It has been observed, that peroxides used in conventional degradation processes exert different modes of action. One effect is, that the peroxides effect a breakage of the chains of the polymer molecules and, consequently, a corresponding decrease in viscosity of the polymer. A second effect is, that peroxide-induced radicals are recombining. Both effects are to a certain extent always present in peroxide induced degradation processes. The actual extent of each effect is influenced by the nature of the peroxide.

For the coupling reaction of the present invention such peroxides are used, where the second mode of action is increased compared to "pure" degradation peroxides.

The coupling reaction is preferably carried out during melt processing, e.g. a proper amount of peroxide is added to the polypropylene composition in a uniaxial extruder, twin-extruder, kneader, banbury mixer, roll mill etc. at a temperature below the melting point of the polymer. Alternatively, a solution of peroxide can be injected into the polymer melt during extrusion.

It is preferred that the coupling reaction is carried out at a temperature of 170-250°C.

Moreover, the chemical coupling reaction should be carried out under such conditions (i.e. amount of peroxide, temperature, reaction time) that the degradation degree of the polypropylene composition, i.e. the ratio between the MFR of the polypropylene composition after (MFR₁) and before (MFR₀) the modification MFR₁/MFR₀, is preferably 1.2 to 30, more preferably 1.5 to 20, still more preferably 1.5 to 10, especially preferred is a ratio of 2.0 to 7. When the degradation degree is less than 1.2, the degree of modification is so little that the full ability of obtained modified propylene polymer composition is not sufficient. On the other hand, when it is more than 30, the degradation procedure results in inferior impact strength of the composition.

Furthermore, the initiator for the coupling reaction is preferably used in an amount of 0.01 to 5 wt%, more preferably 0.05 to 2 wt%, preferably 0.01 to 1.0 wt% based on the total heterophasic propylene copolymer.

The polypropylene composition comprises a heterophasic propylene copolymer. There are essentially two kinds of heterophasic propylene copolymers known in the art, namely heterophasic copolymers comprising a propylene random copolymer as matrix phase (RAHECO) and heterophasic copolymers having a propylene homopolymer as matrix phase (HECO). RAHECO's are mainly used for soft fibres and soft films. HECO's are used for a wide variety of applications, including household applications and car bumpers, because of the good mechanical properties, especially impact strength.

Propylene random copolymers are usually produced by statistical insertion of units of ethylene or higher alpha-olefins in a conventional copolymerisation reaction. Higher alpha olefins are C₄ to C₁₀ monomers, like butene, pentene, hexene, heptene, octene or 3-methyl-1-butene, 3-methyl-hex-1-ene, or butene in combination with ethylene. In the present invention ethylene as comonomer is preferred.

The comonomer content in the propylene random copolymer is preferably very low and may not be higher than 5 wt%, more preferred is a comonomer content of 0.5 to 5 wt%, most preferred 0.5 to 2 wt%, based on the total propylene random copolymer.

However, in the present invention it is preferred that the heterophasic propylene copolymer contains a propylene homopolymer as matrix phase.

Propylene homopolymers are usually obtained by polymerisation with Zieger-Natta catalysts and thus have a broad molecular weight distribution M_{w}/Mₙ of from 4 to 10. Suitable catalysts are not restricted to Ziegler-Natta catalysts, but also metallocene catalysts can be used.

The disperse phase of the present invention is an ethylene-propylene rubber, which comprises a propylene (C₃-) rich ethylene-propylene rubber fraction (1) having an intrinsic viscosity of 1.1 to 2.3 dl/g and a propylene content of 55 to 90 wt.-%, based on the total ethylene-propylene rubber fraction (1).

Furthermore, it is preferred that the intrinsic viscosity of the ethylene-propylene-rubber fraction (1) is between 1.3 to 2.1 dl/g, more preferred between 1.5 and 1.9 dl/g

Additionally, it is preferred that the propylene content of the ethylene-propylene rubber fraction (1) is between 60 to 85 wt%, more preferred between 65 to 80 wt%, based on the total ethylene-propylene rubber fraction (1).

It is preferred that the ethylene-propylene rubber fraction has as monomodal molecular weight distribution.

In a further embodiment of the present invention the ethylene-propylene rubber of the heterophasic propylene copolymer is a bimodal ethylene-propylene rubber, i.e. the ethylene-propylene rubber of the present invention comprises the C₃-rich ethylene-propylene rubber fraction (1) combined with ethylene-propylene rubber fraction (2), which has a lower propylene content than the ethylene-propylene rubber fraction (1).

It is preferred that the ethylene-propylene rubber fraction (2) has a propylene content of 10 to 50 wt.-%, more preferred of 20 to 45 wt%, based on the total ethylene-propylene rubber fraction (2).

Furthermore, it is preferred that the bimodal ethylene-propylene rubber comprises the ethylene-propylene rubber fraction (1) in an amount of 40 to 80 wt%, more preferred of 45 to 75 wt%, based on the total amount of the ethylene-propylene rubber.

The ethylene-propylene rubber fraction (2) is preferably present in an amount of 20 to 60 wt%, more preferably of 25 to 55 wt% in the bimodal ethylene-propylene rubber.

The ethylene-propylene rubber is used in an amount of 10 to 20 wt% based on the total weight of the heterophasic propylene copolymer.

The heterophasic propylene copolymer with a disperse phase of ethylene-propylene rubber fraction (1) alone or in combination with the ethylene-propylene rubber fraction (2) may be produced by multistage process polymerisation as bulk polymerisation, gas phase polymerisation, slurry polymerisation, solution polymerisation or combinations thereof using conventional catalyst. Those processes are well known to a person skilled in the art.

A preferred process is a combination of a bulk slurry loop reactor(s) and one or more gas phase reactor(s). The matrix of the heterophasic propylene copolymer can be made either in loop reactors or in combination of loop and gas phase reactor.

The polymer produced in this way is transferred into another reactor and the ethylene-propylene rubber of the present invention is polymerised. Preferably this polymerisation step is done in a gas phase polymerisation.

A suitable catalyst for the polymerisation of the heterophasic copolymer is any stereospecific catalyst for propylene polymerisation which is capable of polymerising and copolymerising propylene and comonomers at a temperature of 40 to 110 °C and at a pressure from 10 to 100 bars. Ziegler-Natta or metallocene catalysts are especially suitable catalysts.

One skilled in the art is aware of the various possibilities to produce such heterophasic systems and will simply find out a suitable procedure to produce suitable heterophasic systems which are used in the present invention.

Heterophasic propylene copolymers produced in a sequential polymerisation process typically contain a disperse phase comprising crystalline inclusions. It has been found that such heterophasic propylene copolymers are more suitable to improve stress whitening resistance than heterophasic propylene compositions where the disperse phase does not contain crystalline inclusions. The crystallinity of the dispersed phase is preferably less than 30 wt%, more preferably less than 20 wt%, based on the amount of the dispersed phase.

Moreover, in the present invention an ethylene homo- or copolymer is added to the polypropylene composition. The ethylene homo- or copolymer is used as a further modifier for the polypropylene composition.

The ethylene homo- or copolymer may be a high density polyethylene (HDPE), low density polyethylene (LDPE) or a linear low density polyethylene (LLDPE).

It is preferred that the density of the ethylene homo- or copolymer is equal to or less than 930 kg/m³, but still better results regarding stress whitening are achieved with an ethylene homo- or copolymer having a density of equal to or less than 925 kg/m³. Densities for the ethylene homo- or copolymer of less than 900 kg/m³ are not preferred.

A preferred lower limit of density of the ethylene homo- and copolymer is 910 kg/m³.

The external ethylene copolymer comprises preferably 0.5 to 5 wt% of one or more C₃ to C₁₂-alpha olefins, more preferably 1 to 4 wt%, based on the ethylene copolymer.

The C₃ to C₁₂-alpha olefins comonomers may be propene, butene, pentene, hexene, octene or 4-methyl-pentene and the like.

Moreover, the (linear) low density ethylene homo- or copolymer preferably exhibits a strain hardening behaviour, which is an indication for the presence of long chain branching.

The external (linear) low density ethylene homo- and copolymer is either produced in a high pressure process or, alternatively, in a low-pressure process with catalysts like single-site catalysts, for example supported or non-supported catalyst based on specific metallocene complexes like rac-[ethylene bis (2-tert-butyldimethylsiloxyl)indenyl)]zirconium dichloride or rac-[ethylenebis(1-tert-butyldimethylsiloxyl)indenyl)]zirconium dichloride (see Malmberg et al. Macromolecules 32 (1999), p. 6687 to 6696 and 35 (2002), p. 1038 to 1048).

Furthermore, the polypropylene composition preferably has an MFR-value of 0.5 to 500 g/10min (230 °C/2.16 kg), more preferably of 1.5 to 100g/10 min (230 °C/2.16 kg) and most preferably of 3 to 50 g/10 min (230 °C/2.16 kg).

Additionally, the polypropylene composition preferably comprises up to 0.5 wt.-% based on the propylene composition of one or more alpha-nucleation agents, like NA 21 or NA 11, which are commercially available from Asahi Denka Kogy (Japan).

The polypropylene composition may also contain usual additives. As examples of such additives may be mentioned: stabilizers such as inhibitors of oxidative, thermal or ultraviolet degradation, lubricants, such as calcium stearate etc., extender oils, acid scavengers, release agents, clarifiers, such as glycerol monostearate etc., colorants, reinforcing or non-reinforcing fillers, such as calcium carbonate, silica, clay, chalk, carbon black, etc.. These additives may be employed in usual amounts and may be introduced before, during or after modification.

The polypropylene composition preferably has a residual stress whitening at 90° of below 2.90 mm, more preferably below 1.50 mm in a reversed three point bending test.

Additionally, the polypropylene composition preferably has a stress whitening angle of at least 38°, more preferably of at least 45° in a reversed three point bending test.

Furthermore, the polypropylene composition preferably has a flexural modulus of 800 to 1800 MPa, more preferably of 1000 to 1600 MPa.

The flexural strength of the polypropylene composition preferably ranges from 20 to 50 MPa, more preferably from 25 to 45 MPa.

Also, the polypropylene composition preferably has an impact strength at room temperature higher than 7.5 kJ/m², more preferably higher than 8.5 kJ/m².

The flexural strain at flexural strength of the polypropylene composition preferably ranges from 5 to 10 %, more preferably from 6 to 9%.

Moreover, the flexural stress at 3,5% strain of the polypropylene composition preferably ranges from 20 to 40 MPa, more preferably from 23 to 35 MPa.

Furthermore, in the process of the present invention the ethylene-propylene rubber of the heterophasic propylene copolymer may also contain a further ethylene-propylene rubber fraction (2) having a propylene content of 10 to 50 wt.-%, based on the total ethylene-propylene rubber fraction (2).

The polypropylene composition can be used for a wide variety of applications, like food or medical applications, household articles, fibres, films, car bumpers, and the like.

### 1. Measurement methods

### a) Stress whitening

### Stress whitening

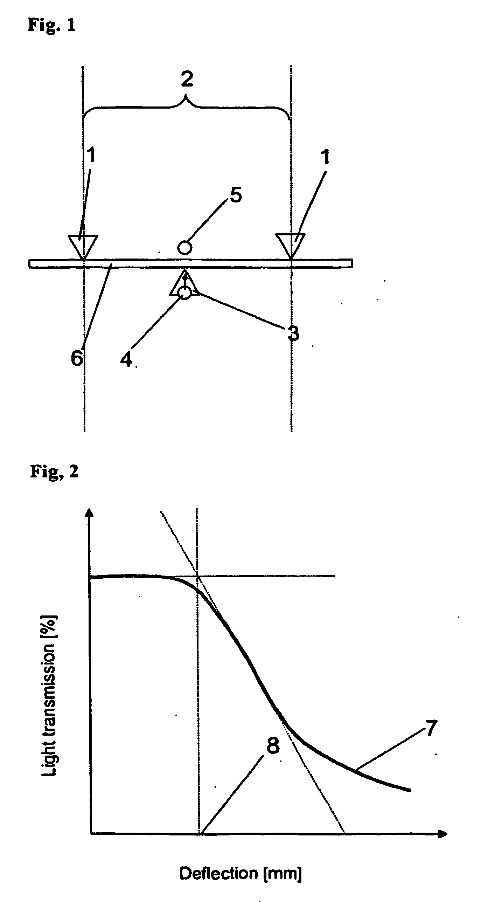

Stress whitening measurement is explained below and also with reference to the drawings Fig. 1 and Fig. 2.
Fig. 1: schematic representation of experimental set up for stress whitening measurement
Fig. 2: schematic diagram of recorded function during stress whitening experiment.

Samples for the stress whitening measurement are injection-moulded UL94 specimens with the dimension of 125 x 12.5 x 2 mm (length x width x thickness)

The measurement of the stress whitening is performed in a reversed three point bending test on a universal testing machine (Zwick Z010) with a test speed of 50 mm/min. Definitions of technical terms (e.g. deflection, support, loading edge) in this specific test method are as described in ISO 178 (flexural test).

On the fixed part, two supports (1) are mounted with a length of span (2) of 40 mm between the supports (1). On the moving part, the loading edge (3) contains a light source (4) and an optical sensor (5) is fixed in such a way that the tested sample (6) is placed between the light source (4) and the optical sensor (5). The distance between the light source (4) and the optical sensor (5) remains constant during the test. The optical response (7) (light transmission through the sample (6)) and the bending force are recorded as function of the deflection (distance over which the top or bottom surface of the sample (6) at midspan deviates from its original position during bending). The bending angle is calculated from the deflection using standard trigonometry formulas.

Two different parameters are determined:
i. Stress whitening angle [°] is the bending angle at which stress whitening occurs. The occurrence of stress whitening corresponds to a sharp drop of the optical response during bending at a specific deflection value (8).
ii. Residual stress whitening 90° [mm] is the residual size of the blushing zones immediately after a bending of 90°. Bending test is conducted to a bending angle of 90°. The specimen is then released with a crosshead speed of 400 mm/min. The length of the blushing area (measured parallel to the length direction of the sample) measured immediately after releasing is the Residual stress whitening 90°.

### b) Melt flow rate

The melt flow rate is determined according to ISO 1133 and it is indicated in g/10min. The MFR is an indication of the flowability and thus the processability of the polymer. The higher the melt flow rate, the lower the viscosity of the polymer. The MFR of the polypropylene composition is measured with a load of 2.16 kg at 230 °C, for polyethylene it is measured with a load of 2.16 kg at 190 °C

### c) Intrinsic viscosity

The intrinsic viscosity was measured according to DIN ISO 1628-1.

### d) Impact strength

The Charpy notched impact strength was determined according to ISO179-2/leA on specimen bars of 80x10x4mm.

### e) Flexural test

The flexural test parameters (flexural modulus, flexural strength, strain at flexural strength, stress at 3,5% strain) were determined according to ISO 178 on specimen bars of 80x10x4mm.

### c) Density

The density was measured according to ISO 1183.

### 2. Examples

All polypropylene compositions for examples and comparative examples are produced in a multi stage reactor arrangement. The propylene homopolymer matrix is first synthesised in a loop reactor and the ethylene-propylene rubber is polymerised in a gas phase reactor. In case of bimodal ethylene-propylene rubber, a second gas phase reactor was used. The compositions of the examples and comparative examples and their properties are given in Table 1. The free radical initiator was tert-butylperoxy-isopropyl-carbonate. The external polyethylene has a melt flow rate of 15 g/10 min (190 °C/2.16 kg) and a density of 915 kg/m³.

### Modification procedure (=coupling reaction)

Polypropylene composition, additives and additionally external ethylene polymer were fed continuously into a mixer. Peroxide initiator was dosed, depending on the desired modification level, directly into the mixer. The reaction mixture was transferred to a twin-screw extruder (Temperature profile: 25/165/170/165/190/220/220/230 °C) for melting, homogenisation and devolatilisation, and then pelletised.

**Table 1**

| | | **Examples** | | | | **Comparative Examples** | | | | | |
|---|---|---|---|---|---|---|---|---|---|---|---|
| | | 1* | 2 | 3 | 4 | 1 | 2 | 3 | 4 | 5 | 6 |
| Matrix MFR | g/10min | 2.5 | 2.5 | 2.5 | 2.5 | 10 | 10 | 10 | 10 | 2.5 | 2.5 |
| EPR content | wt% | 12 | 12 | 12.0 | 6.0/6.0 | 12 | 12 | 12 | 12 | 12 | 12 |
| C₃(EPR) content | wt% | 72 | 72 | 72 | 72 / 39 | 51 | 51 | 51 | 51 | 49 | 49 |
| IV (EPR) | dl/g | 1.70 | 1.80 | 1.80 | 1.70/1.70? | 1.74 | 1.74 | 1.04 | 2.4 | 1.70 | 1.80 |
| Final MFR (Base polymer) | g/10min | 2.5 | 2.5 | 2.5 | 2.5 | 7.0 | 7.0 | 9.8 | 5.1 | 2.4 | 2.4 |
| **Additives** | | | | | | | | | | | |
| Calcium stearate | wt% | 0.1 | 0.1 | 0.1 | 0.1 | 0.1 | 0.1 | 0.1 | 0.1 | 0.1 | 0.1 |
| Irganox B215 | wt% | 0.15 | 0.15 | 0.15 | 0.15 | 0.15 | 0.15 | 0.15 | 0.15 | 0.15 | 0.15 |
| GMS | wt% | 0.4 | 0.4 | 0.4 | 0.4 | 0.4 | 0.4 | 0.4 | 0.4 | 0.4 | 0.4 |
| NA11 | wt% | 0.1 | 0.1 | 0.1 | 0.1 | 0.1 | 0.1 | 0.1 | 0.1 | 0.1 | 0.1 |
| **Modification** | | | | | | | | | | | |
| Additional 10% PE Modifier | | No | Yes | Yes | Yes | Yes | No | No | No | Yes | No |
| Modification peroxide | | Yes | Yes | Yes | Yes | No | No | No | No | Yes | Yes |
| | | | | | | | | | | | |
| MFR value | g/10min | 7.9 | 7.5 | 12.6 | 7.8 | 7.6 | 7.5 | 9.8 | 5.1 | 6.3 | 7.1 |
| Flexural Modulus | MPa | 1340 | 1147 | 1063 | 1201 | 1340 | 1598 | 1485 | 1587 | 1281 | 1530 |
| Flexural strength | MPa | 36.7 | 32.3 | 30.1 | 31.7 | 32.5 | 39.8 | 38.5 | 38.9 | 32.7 | 38.8 |
| Flexural Strain at Flexural Strength | % | 7.0 | 7.1 | 7.2 | 6.8 | 6.2 | 6.5 | 7.1 | 6.7 | 6.5 | 6.2 |
| Flexural Stress at 3,5% Strain | MPa | 30.8 | 26.8 | 24.8 | 27.1 | 29.2 | 34.9 | 32.3 | 34.7 | 28.7 | 34.2 |
| Impact strength (RT) | kJ/m² | 9.8 | 13.2 | 9.3 | 9.7 | 7.0 | 6.1 | 3.9 | 9.5 | 9.8 | 8.2 |
| **Stress whitening angle** | ° | 46.7 | 56.2 | 54.1 | 38.6 | 31.92 | 30.2 | 36.5 | 25.8 | 39.6 | 34.3 |
| **Residual stress whitening 90°** | mm | 2.66 | 0.7 | 0 | 2.8 | 3.76 | 4.3 | 2.96 | 4.9 | 3.22 | 3.8 |

| | | | | | | | | | | | |
|---|---|---|---|---|---|---|---|---|---|---|---|
| * (reference example) | | | | | | | | | | | |

## Claims

1. A process for the production of a modified polypropylene composition wherein a polypropylene composition comprising
a heterophasic polypropylene copolymer consisting of
(a) a propylene homopolymer or a propylene random copolymer with a comonomer content of not more than 5 wt% based on the total propylene copolymer as matrix phase and
(b) 10-20 wt%, based on the total weight of the heterophasic propylene copolymer, of an ethylene-propylene rubber comprising an ethylene propylene rubber fraction (1) having an intrinsic viscosity of 1.1 to 2.3 dl/g and a propylene content of 55 to 90 wt% based on the total ethylene propylene rubber fraction;
is modified by reacting the composition with a coupling agent and 2 to 30 wt% of an ethylene homo- or copolymer, based on the total polypropylene composition, is added to the composition.

2. The process according to claim 1 wherein the coupling agent is a free radical initiator, preferably an organic peroxide.

3. The process according to 1 or 2 wherein the polypropylene composition is modified during melt processing.

4. The process according to claims 1 to 3 wherein the ethylene propylene rubber comprises a further ethylene-propylene rubber fraction (2) which has a lower propylene content than ethylene-propylene rubber fraction (1).

5. The process according to claims 1 to 4 wherein the ethylene-propylene rubber fraction (2) has a propylene content of 10 to 50 wt.-%, based on the total ethylene-propylene rubber fraction (2).

6. An article comprising a modified polypropylene composition as produced according to claims 1 to 5.

7. Use of a modified polypropylene composition as produced according to claims 1 to 5.

## Patentansprüche

1. Verfahren zur Herstellung einer modifizierten Polypropylenzusammensetzung, wobei eine Polypropylenzusammensetzung umfassend
ein Propylencopolymer mit verschiedenen Phasen, bestehend aus
a) einem Propylenhomopolymer oder einem statistischen Propylencopolymer mit einem Comonomergehalt von nicht mehr als 5 Gew.-%, und zwar auf das gesamte statistische Propylencopolymer als Matrixphase bezogen, und
b) 10-20 Gew. -%, bezogen auf das Gesamtgewicht des Propylencopolymers mit verschiedenen Phasen, eines Ethylen-Propylen-Kautschuks umfassend einen Anteil (1) in Form eines Ethylen-Propylen-Kautschuks mit einer Strukturviskosität von 1,1 bis 2,3 dl/g und einem Propylengehalt von 55 bis 90 Gew.-%, und zwar auf den gesamten Anteil (1) in Form eines Ethylen-Propylen-Kautschuks bezogen,
durch die Reaktion der Zusammensetzung mit einem Kopplungsmittel modifiziert wird.

2. Verfahren nach Anspruch 1, **dadurch gekennzeichnet, dass** das Kopplungsmittel ein Radikalbildner, vorzugsweise ein organisches Peroxid ist.

3. Verfahren nach Anspruch 1 oder 2, **dadurch gekennzeichnet, dass** die Polypropylenzusammensetzung während der Verarbeitung der Schmelze modifiziert wird.

4. Verfahren nach den Ansprüchen 1 bis 3, **dadurch gekennzeichnet, dass** der Ethylen-Propylen-Kautschuk einen weiteren Anteil (2) in Form eines Ethylen-Propylen-Kautschuks umfasst, der einen geringeren Propylengehalt als der Anteil (1) in Form eines Ethylen-Propylen-Kautschuks aufweist.

5. Verfahren nach den Ansprüchen 1 bis 4, **dadurch gekennzeichnet, dass** der Anteil (2) in Form eines Ethylen-Propylen-Kautschuks einen Propylengehalt von 10 bis 50 Gew.-% aufweist, und zwar auf den gesamten Anteil (2) in Form eines Ethylen-Propylen-Kautschuks bezogen.

6. Gegenstand, der eine modifizierte Polypropylenzusammensetzung wie nach den Ansprüchen 1 bis 5 hergestellt umfasst.

7. Verwendung einer modifizierten Polypropylenzusammensetzung wie nach den Ansprüchen 1 bis 5 hergestellt.

## Revendications

1. Procédé de production d'une composition de polypropylène modifiée, dans lequel une composition de polypropylène comprend
un copolymère de polypropylène hétérophasique comprenant
(a) un homopolymère de propylène ou un copolymère statistique de propylène présentant une teneur en comonomère ne dépassant pas 5 % en poids par rapport au copolymère de propylène total, servant de phase de matrice, et
(b) de 10 à 20 % en poids, par rapport au poids total du copolymère de propylène hétérophasique, d'un caoutchouc d'éthylène-propylène comprenant une fraction caoutchouc d'éthylène-propylène (1) présentant une viscosité intrinsèque de 1,1 à 2,3 dl/g et une teneur en propylène de 55 à 90 % en poids par rapport à la fraction caoutchouc d'éthylène-propylène totale ;
est modifiée par réaction de la composition avec un agent de couplage et 2 à 30 % en poids d'un homo- ou co-polymère d'éthylène, par rapport à la composition de polypropylène totale, sont ajoutés à la composition.

2. Procédé selon la revendication 1, dans lequel l'agent de couplage est un amorceur radicalaire libre, de préférence un peroxyde organique.

3. Procédé selon la revendication 1 ou 2, dans lequel la composition de polypropylène est modifiée pendant le traitement de fusion.

4. Procédé selon les revendications 1 à 3, dans lequel le caoutchouc d'éthylène-propylène comprend une autre fraction caoutchouc d'éthylène-propylène (2) qui présente une teneur en propylène inférieure à celle de la fraction caoutchouc d'éthylène-propylène (1).

5. Procédé selon les revendications 1 à 4, dans lequel la fraction caoutchouc d'éthylène-propylène (2) présente une teneur en propylène de 10 à 50 % en poids par rapport à la fraction caoutchouc d'éthylène-propylène totale (2).

6. Article comprenant une composition de polypropylène modifiée telle que produite selon les revendications 1 à 5.

7. Utilisation d'une composition de polypropylène modifiée telle que produite selon les revendications 1 à 5.
